# EUROPÄISCHE PATENTANMELDUNG

(11) **EP 1 550 684 A2**
(43) Veröffentlichungstag der Anmeldung: **06.07.2005**
(21) Anmeldenummer: 04107039.2
(22) Anmeldetag: 29.12.2004
(51) Int. Cl.: C08G 69/14, C08K 5/00

(54) **Verwendung von thermoplastischen Polyamid-Formmassen mit reduzierter Bildung von Feststoffablagerungen**

(30) Priorität: 30.12.2003 DE 10361711
(71) Anmelder: EMS-Chemie AG, 7013 Domat/Ems (CH)
(72) Erfinder: Stöppelmann, Georg Dr.rer.nat., 7402, Bonaduz (CH); Rexin, Ornulf Dr.rer.nat., 7013, Domat/Ems (CH); Schmid, Eduard Dr.sc.nat., 7402, Bonaduz (CH); Kettl, Ralph Dipl.-Ing. (FH), 7417, Paspels (CH); Hewel, Manfred Dr.rer.nat., 7013, Domat/Ems (CH)
(74) Vertreter: Becker Kurig Straus

(57) **Zusammenfassung**

Die vorliegende Erfindung betrifft die Verwendung von thermoplastischen Polyamid-Formmassen mit verringerter oder stark reduzierter Bildung von Feststoffablagerungen und/oder Belägen bei der thermoplastischen Umformung, enthaltend mindestens 20 Gew.-% Polyamid und/oder mindestens ein Copolymer mit mindestens 20 Gew.-% Polyamid-Bausteinen, 0,05 Gew.-% bis maximal 3,0 Gew.-%, bevorzugt 0,1 Gew.-% bis 2 Gew.-%, jeweils bezogen auf das Gesamtgewicht der Polyamidmatrix-Komponente, mindestens einer Verbindung, ausgewählt aus der Gruppe, bestehend aus Benzolsufonsäurealkylamiden, o, p-Toluolsufonsäurealkylamiden, Alkylhydroxybenzoaten, Benzolcarbonsäureestern, Phthalsäureestern, Fettsäureestern, Estern mehrwertiger Alkohole, Dicarbonsäurediestern mit einer Kohlenstoffzahl der Säuren von 4 bis 12 Atomen, Trialkylmellitsäureestern, Phosphorsäureestern, Zitronensäureestern, Tetraalkylethylendiaminen, Tetra(2-hydroxyalkyl)alkylendiaminen, Trialkylaminen, N-alkylierten, zyklischen Carbonsäureamiden mit 5 bis 7 Ringgliedern oder vollständig alkylierten Harnstoffderivaten und Gemischen der vorgenannten Verbindungen.

## Beschreibung

Die vorliegende Erfindung betrifft im allgemeinen die Verwendung von thermoplastischen Polyamid-Formmassen mit verringerter oder stark reduzierter Bildung von Feststoffablagerungen bei der thermoplastischen Umformung zu Gebrauchsgegenständen in diskontinuierlichen Prozessen, insbesondere im Spritzguss, und in kontinuierlichen Prozessen wie der Extrusion zu Folien, Fasern, Rohren und Ummantelungen. Die verwendeten Formmassen basieren auf Polyamiden, die mindestens 20 Gew.-% Polyamid und/oder Copolymere mit mindestens 20 Gew.-% Polyamid-Bausteinen, enthalten. Die vorliegende Erfindung betrifft ganz besonders bevorzugt die Verwendung von thermoplastischen Polyamid 12-Formmassen auf Basis von hydrolytisch hergestelltem Polyamid 12, die zur Vermeidung oder zur Reduktion der Bildung von Monomerablagerungen spezifische Verbindungen in bestimmten mengenmäßigen Anteilen enthalten. Die so hergestellten erfindungsgemäßen Polyamid-Formmassen ergeben keine der sonst üblichen Feststoffablagerungen und/oder Beläge bei der weiteren Verarbeitung im Spritzguss oder in der Extrusion.

Als Polyamide im erfindungsgemäßen Sinne werden daher Polyamide angesehen, basierend auf C₆-C₁₂-Lactamen oder ω-Aminocarbonsäuren mit 4 bis 18 Kohlenstoffatomen, bevorzugt 6 bis 12 Kohlenstoffatomen, oder Polykondensate verwendet, erhältlich aus der Polykondensation von mindestens einem Diamin aus der Gruppe der aliphatischen Diamine mit 4 bis 18 C-Atomen, der cycloaliphatischen Diamine mit 7 bis 22 C-Atomen in Kombination mit mindestens einer Dicarbonsäure aus der Gruppe aus aliphatischen Dicarbonsäuren mit 4 bis 44 C-Atomen, cycloaliphatischen Dicarbonsäuren mit 8 bis 24 C-Atomen und aromatischen Dicarbonsäuren mit 8 bis 20 C-Atomen. Die ω-Aminocarbonsäuren oder die Lactame sind ausgewählt aus der Gruppe bestehend aus ε-Aminocapronsäure, 11-Aminoundecansäure, 12-Aminododecansäure, ε-Caprolactam, Enantholactam, Laurinlactam. Weiterhin ist es erfindungsgemäß möglich, Mischungen solcher Polymerisate bzw. Polykondensate einzusetzen. Erfindungsgemäß geeignete Diamine, die mit einer Dicarbonsäure kombiniert werden, sind beispielsweise 2,2,4- oder 2,4,4-Trimethylhexamethylendiamin, 1,3- oder 1,4-Bis(aminomethyl)cyclohexan, Bis(p-aminocyclohexyl)methan, m- oder p-Xylylendiamin, 1,4-Diaminobutan, 1,5-Diamino-2-methylpentan, 1,6-Diaminohexan, 1,8-Diaminooctan, 1,9-Diaminononan, 2-Methyl-1,8-diaminooctan, 1,10-Diaminodecan, 1,12-Diaminododecan, Cyclohexyldimethylendiamin, und die Dicarbonsäuren ausgewählt sind aus der Gruppe der Bernsteinsäure, Glutarsäure, Adipinsäure, Suberinsäure, Pimelinsäure, Korksäure, Azelainsäure, Sebazinsäure, Dodecandicarbonsäure, Oktadecandicarbonsäure, 4-Cyclohexan-dicarbonsäure, Terephthalsäure, Isophthalsäure und den Naphthalindicarbonsäuren.

Konkrete Beispiele für die im Rahmen der vorliegenden Erfindung eingesetzten Polyamide bzw. die zusätzlich in die Mischungen bzw. Legierungen einzubringenden (Co)Polyamide für die erfindungsgemäßen Formmassen sind daher Homo- oder Copolyamide aus der Gruppe aus PA 6, PA 66, PA 11, PA 46, PA 12, PA 1212, PA 1012, PA 610, PA 612, PA 69 PA 9T, PA 10T, PA 12T, PA 12I, deren Gemische oder Copolymere auf Basis der verwendeten Monomeren. Bevorzugt sind erfindungsgemäß auch Copolyamide PA 12T/12, PA 10T/12, PA 12T/106 und PA 10T/106. Weiterhin sind z. B. PA 6/66, PA 6/612, PA 6/66/610, PA 6/66/12, PA 6T/66, PA 6/6T, PA 6/6I, PA 6I/6T oder deren Gemische oder Gemische wie PA 12/MACMI, PA 66/6I/6T, MXD 6/6 ebenfalls bevorzugte Formmassen.

Die erfindungsgemäßen Polyamid-Formmassen können aber auch Polyamid Blockcopolymere, insbesondere Polyamid 12-Blockcopolymere, enthalten, die Polyester-, Polyether-, Polysiloxan-, Polycarbonat-, Polyacrylat-, Polymethacrylat- oder Polyolefinsegmente als weitere Bausteine neben einem Anteil von mindestens 20 % Polyamid-Bausteinen, insbesondere Polyamid 12-Bausteinen, enthalten. Als Vertreter dieser Polymerklasse seien Polyetheramide, Polyetheresteramide und Polyesteramide genannt.

Polyamidschmelzen weisen im thermodynamischen Gleichgewichtszustand bestimmte Konzentrationen an linearen und gegebenenfalls zyklischen Monomeren sowie linearen und zyklischen Oligomeren sowie auch Wasser auf. Die niedrigmolekularen Bestandteile beeinflussen die Verarbeitbarkeit der Produkte. Sie senken die Viskosität der Polymerschmelzen. Bei Spritzguss- oder Extrusionsprozessen können Restmonomere, insbesondere Lactame, und zyklische Oligomere ausdampfen und durch die Bildung von Feststofablagerungen und Belägen stören.

Polyamide enthalten daher, wie alle in Stufenwachstumsreaktionen entstandenen Polymere, von Natur aus geringe Konzentrationen an Restmonomeren und Oligomeren.

Im allgemeinen werden die Monomeren und/oder Oligomeren durch statische oder dynamische Extraktion mit Wasser, Methanol, Ethanol, Ethanol/Wasser oder Chloroform aus den Polyamidgranulaten abgetrennt. Nach DIN 53378 bzw. DIN ISO 6427 sind Polyamid-Pulver bestimmter Körnung unter bestimmten Bedingungen mit Methanol zu extrahieren. Die Monomeren fallen stets im Gemisch mit Oligomeren an. Diese lassen sich je nach Art und Molmasse in Abhängigkeit von den Extrationsbedingungen mehr oder weniger vollständig aus den Polyamiden abtrennen.

Bei den amorphen teilaromatischen Copolyamiden besteht aber die Problematik, dass eine Extraktion mit üblichen Lösemitteln wie Methanol oder Methylenchlorid wegen der hohen Glasübergangstemperatur der Produkte keine nennenswerten Extraktmengen liefert und das Polymermaterial bei der Verwendung höhersiedender Alkohole zusammenfließt.

Bei teilaromatischen Polyamiden und den sogenannten HT-Polyamiden wie PA 6I/6T müssen neben den Restmonomeren und Oligomeren auch die bei der Herstellung und Verarbeitung gebildeten, niedermolekularen Abbauprodukte hinsichtlich der Belagsbildung berücksichtigt werden.

Daher ist es wünschenswert, die oben angesprochenen niedrigmolekularen Bestandteile als auch Oligomere möglichst zu entfernen bzw. zu vermeiden, so dass bei der späteren thermoplastischen Verarbeitung keine Feststoffablagerungen oder Beläge mehr entstehen.

Polyamid 12 (PA 12) ist nun ein Polyamid-Typ, der sich durch ein speziell interessantes Eigenschaftsprofil auszeichnet. So lässt sich Polyamid 12 auf die verschiedensten Arten modifizieren, und die resultierenden Formmassen sind danach ausgezeichnet thermoplastisch im Spritzguss und in Extrusionsprozessen zu Gebrauchsgegenständen von hohem Praxiswert umformbar. Polyamid 12 entspricht insgesamt dem Polyamid-Typ, dessen Eigenschaften im Praxisgebrauch bei Änderung von Temperatur und Feuchte am wenigsten beeinflußt werden.

Ein Problem ist aber, dass beim üblichen, hydrolytischen Polymerisationsprozess/Autoklavenprozess der Monomerumsatz nur zu ca. 99,5 % erfolgt und das verbleibende Restlactam im Polymer schwerlöslich ist, so dass es insbesondere beim Verarbeiten aus der Schmelze, aber auch im späteren Praxisgebrauch zum Ausschwitzen und Sublimieren von Lactam 12 (LC12), insbesondere auf gekühlte Flächen, z. B. die Oberflächen der Werkzeuge und der Fertigteile, und damit zu Belagsbildung kommt. Insbesondere wegen des hohen Schmelzpunktes von Lactam 12 bilden solche Sublimate oft störende Ablagerungen, die insbesondere dann, wenn weitere Zusätze an die Oberfläche migrieren, Anlass zu Prozessstörungen mit Oberflächenbeschädigungen und damit zu Produktionsunterbrüchen führen können und sich auch sogenannte "Black-Spots" bilden können. Bekannte Maßnahmen zur Reduktion und Eliminierung des Lactam 12 - Restgehaltes sind z.B., die Schmelze- und die Festphasen- Nachkondensation mit Vakuumeinwirkung sowie Flüssigextraktionsprozesse oder die Umfällung aus alkoholischer Lösung. Auch diese Prozesse, bei denen sich Lactam unter Wärmeeinwirkung verflüchtigt, können durch das Lactamsublimat gestört werden. Zudem sind Lactamnebel leichtentzündlich, und die Prozesse bedürfen spezieller Vorsichtsmassnahmen. Zudem kann die zusätzliche thermische Belastung das Polymer schädigen. Bei der thermoplastischen Verarbeitung von Polyamid 12 (PA12) - Formmassen im Spritzgussverfahren und in der Extrusion ist die Bildung von Feststoffablagerungen, die insbesondere aus Lactam 12 (LC 12) bestehen, nachteilig.

Auch andere Polyamide neigen zur Bildung von Ablagerungen, wenn sie höheren Temperaturen, wie sie zum Beispiel bei der thermoplastischen Umformung auftreten können, ausgesetzt werden. Abhängig vom Polyamidtyp setzen sich diese Ablagerungen aus unterschiedlichen Anteilen an Monomeren, Oligomeren sowie diversen Abbauprodukten, die während der Verarbeitung entstehen, zusammen.

Erwünscht sind somit einfache, kostenwirksame Maßnahmen zur Vermeidung der Bildung von Feststoffablagerungen oder von Belägen bei der späteren thermoplastischen Verarbeitung von Polyamid-Formmassen, die insbesondere auf Polyamid, besonders bevorzugt auf Polyamid 12, oder auch einem Copolymer bzw. Polyamid, das Polyamid-Bausteine, insbesondere Polyamid 12-Bausteine mitenthält, basieren.

Das üblicherweise verwendete Verfahren, um Polyamide und insbesondere Polyamid 12 ein höheres Maß an Flexibilität, Dehnbarkeit und Verarbeitbarkeit zu verleihen, besteht darin, Weichmacher in höheren Mengenanteilen, d h. von über 10 Gew.-% einzulagern. Für Polyamid 11 und Polyamid 12 werden zum Beispiel als typische Weichmacher Sulfonamide, Phenolderivate sowie Arylphosphite vorgeschlagen (vgl. EP 0 748 847 B1). Man vermeidet aber Weichmacher-Zusatzmengen, die deutlich unter 10 Gew.-% liegen, denn bei diesen geringen Mengen tritt eine Versprödung und Verhärtung der Polymere ein ("Antiweichmachung"). Erst ab höheren Konzentrationen entfalten die Weichmacher ihre Wirkung (vgl. Ullmauns Encyklopädie der technischen Chemie, 4. Auflage, Band 24, S. 357, "Weichmacher").

Die US 6,506,830 B1 beschreibt antistatische Polyamid-Formmassen mit den im Stand der Technik üblichen und bekannten Weichmachern. Auch die Weichmacher-Konzentrationen entsprechen den üblich eingesetzten hohen Weichmacher-Konzentrationen (siehe Anspruch 9; bis zu 30 Gew.-%). Obwohl in der US 6,506,830 B1 in Anspruch 9 eine Weichmachermenge von bis zu 30 Gew.-% angesprochen wird und somit theoretisch alle Konzentrationsbereiche mitumfasst sind, ist aus der Literatur bekannt, dass geringe Weichmacherzusätze aufgrund des sogenannten Anti-Weichmacher-Effektes eher als kontraproduktiv im Hinblick auf eine Verbesserung der Materialeigenschaften gesehen werden. Im gleichen Kontext wie die Weichmacher werden aber auch Lactame genannt, die als Ursache für die Entstehung von Ablagerungen verantwortlich sind.

In der EP 0 748 847 A2 werden übliche weichmacherhaltige Polyamid-Formmassen beschrieben, welche erkennbar sind an den hohen Weichmacher-Konzentrationen (bevorzugt 8 bis 20 Gew.-%). Darüber hinaus wird die vorteilhafte Verwendung von Weichmachermischungen beschrieben. Bei den aufgeführten Weichmachern sind auch Sulfonamide und Hydroxybenzoate aufgeführt. Die EP 0 748 847 A2 beschränkt sich aber auf die Flexibilisierung und die Kälteschlagfestigkeit von Polyamiden. Zur Ablagerungsproblematik wird nichts erwähnt. Im Gegensatz dazu wird aber das Verdampfen des Weichmachers als Nachteil aufgeführt (vgl. S. 2, Z. 58 bis S. 3, Z. 3). In der EP 0 748 847 A2 wird zwar von der Oberfläche des Formteils gesprochen, aber nur im Zusammenhang mit einer sogenannten "nontacky surface", die in keiner Verbindung zur beschriebenen Ablagerungsproblematik steht. Ansonsten wird bei den Weichmachern das Hauptaugenmerk auf die Einfriertemperatur gelegt. Auf die Eigenschaften bei Raumtemperatur oder höherer Temperatur, welche für die Löslichkeit der Polyamid-spezifischen Ablagerungen erforderlich sind, wird dagegen nicht eingegangen.

Die WO 97/10303 verwendet zur Verbesserung der Verschweissbarkeit oder zur Erhöhung der Bindenahtfestigkeit von Polyamid-Formmassen Weichmacher in Konzentrationen bis zu 5 Gew.-%. Es werden auch Sulfonamide eingesetzt. Im gleichen Kontext wie die Verwendung der Weichmacher werden aber auch Lactame genannt (vgl. S. 4, Z. 35 bis 36). Gerade aber die Lactame sind als Ursache für die Ablagerungen verantwortlich.

WO 01/05888 beschreibt Formmassen, die neben Polyacetal auch Flammschutzmittel und N-haltige Verbindungen enthalten, die auch niedermolekular sein können. Zu diesen Verbindungen gehören auch Sulfonamide und Harnstoffderivate. Die N-haltigen Verbindungen verstärken die Flammwidrigkeit und erhöhen die Stabilität der beschriebenen Formmassen. In ihrer Funktion als Stabilisator werden Konzentrationen von bis zu 2,5 Gew.-% eingesetzt.

Gemäß der WO 01/05888 müssen die Formmassen aber immer Polyacetal enthalten und D4 enthält keinen Hinweis auf die beschriebene Ablagerungsproblematik. Dies ist auch einleuchtend, denn Polyamide können in Polyacetal enthalten sein aber spielen dort nie eine dominante Rolle.

Die EP 0 388 583 A1 zielt auf die Tatsache, die durch Weichmachung verschlechterte Kälteschlagzähigkeit der Polyamid 12-Formmassen durch bestimmte Polyamide wieder auszugleichen. Hier werden übliche weichmacherhaltige Polyamid-Formmassen mit bis 25 Gew.-% Weichmachern beschrieben.

Aufgabe der vorliegenden Erfindung ist es daher, thermoplastische Polyamid-Formmassen bereitzustellen, bei denen bei der thermoplastischen Umformung keine Feststoffablagerungen entstehen.

Die Aufgabe wird erfindungsgemäß durch Bereitstellung thermoplastischer Formmassen gemäß Anspruch 1 erreicht.

Die erfindungsgemäßen thermoplastischen Polyamid-Formmassen mit verringerter oder stark reduzierter Bildung von Feststoffablagerungen bei der thermoplastischen Umformung, enthalten
(A) mindestens 20 Gew.-% Polyamid und/oder mindestens ein Copolymer mit mindestens 20 Gew.-% Polyamid-Bausteinen,
(B) 0,05 Gew.-% bis maximal 3,0 Gew.-%, bevorzugt 0,1 Gew.-% bis 2,0 Gew.-%, besonders bevorzugt 0,15 Gew.-% bis 1,0 Gew.-%, jeweils bezogen auf das Gesamtgewicht der Polyamidmatrix-Komponente, mindestens einer Verbindung, ausgewählt aus der Gruppe, bestehend aus Benzolsufonsäurealkylamiden, o, p-Toluolsufonsäurealkylamiden, Alkylhydroxy-benzoaten, Benzolcarbonsäureestern, Phthalsäureestern, Fettsäureestem, Estern mehrwertiger Alkohole, Dicarbonsäurediestern mit einer C-Zahl von 12 bis 44 Atomen, Trialkylmellitsäureestern, Phosphorsäureestern, Zitronensäureestern, Tetra(2-hydroxyalkyl)-alkylendiaminen und Gemischen der vorgenannten Verbindungen, und/oder
(C) 0,05 Gew.-% bis maximal 3,0 Gew.-%, bevorzugt 0,1 Gew.-% bis 2,0 Gew.-%, besonders bevorzugt 0,15 Gew.-% bis 1,0 Gew.-%, jeweils bezogen auf das Gesamtgewicht der Polyamidmatrix-Komponente, mindestens einer aprotischen Verbindung, ausgewählt aus der Gruppe der N-alkylierten, cyclischen Carbonsäureamide mit 5 bis 7 Ringgliedern der weiter unten stehenden Formel I und/oder der Gruppe der Harnstoffderivate deren Alkylreste am Stickstoff linear oder verzweigt sind und gegebenenfalls Heteroatome und Heterogruppen enthalten können oder eine Verknüpfung der beiden N-Atome bilden.

Erfindungsgemäß wurde nun überraschenderweise festgestellt, dass man durch Zusatz von den in Anspruch 1 genannten Verbindungen (B) und/oder (C) und zwar im Bereich von 0,05 Gew.-% bis 3,0 Gew.-%, in dem an sich eine "Antiweichmachung" zu erwarten wäre, die Bildung von Feststoffablagerung bei der späteren thermoplastischen Umformung stark reduzieren oder vermeiden kann.

Aufgrund des simultanen Entweichens von Monomeren und/oder Oligomeren und/oder Abbauprodukten der Polyamide und der Verbindungen (B) und/oder (C) bei der thermoplastischen Umformung schlagen sich an den kälteren Formteiloberflächen keine festen Beläge nieder, sondern feine mittel bis niedrig viskose Tröpfchen oder Flüssigkeitsfilme, die entweder spontan wegfließen, leicht weggewischt werden können oder wenn sie auf der Oberfläche verbleiben, auch in die Polyamidformmasse zurückdiffundieren. Diese Filme enthalten die aus der Polyamidmatrix sublimierten Monomere, Oligomere oder Abbauprodukte in gelöster, dispergierter oder suspendierter Form. So werden störende Feststoffablagerungen, die bei fortlaufender Verarbeitung aufgrund der herrschenden Bedingungen zu Verkrustungen oder Vercrackungen Anlass geben, in nicht störende oder leicht zu entfernende, niederviskose Beläge umgewandelt.

Die Verbindungen (B) und/oder (C) weisen Löslichkeitsparameter vergleichbar mit den verwendeten Polyamidkomponenten auf und sind daher ausreichend verträglich und polar, so dass selbst die Monomeren, Oligomeren und die Abbauprodukte der Polyamide teilweise oder ganz von ihnen gelöst werden können. Wegen der guten Vertäglichkeit der Verbindungen (B) und/oder (C) mit der Polyamidmatrix und den sublimierenden Monomeren, Oligomeren oder Abbauprodukten genügen bereits kleine Konzentrationen dieser Additive um störende Feststoffablagerungen zu verhindern.

Einige der erfindungsgemäßen Verbindungen (B) und/oder (C) können die bei der Verarbeitung entstandenen Sublimate auch aufgrund ihrer hohen Reaktivität lösen. Beispielsweise werden protonenabgebende Bestandteile des Sublimates durch (Hydroxyalkyl)ethylendiamine neutralisiert. Damit können die ansonsten schwerlöslichen Dicarbonsäuren, wie zum Beispiel Terephthalsäure, in Lösung oder zumindest in eine dispergierte Form gebracht werden und somit die Bildung fester Beläge verhindert werden.

Dies ist insbesondere bei den sogenannten HT-Polyamiden, die auf 6T basieren, wie PA 6I/6T, von Vorteil, da hier durch die erfindungsgemäße Verwendung von Tetra(2-hydroxyalkyl)ethylendiaminen, insbesondere von N,N,N',N-tetrakis(2-hydroxypropyl) ethylendiamin, eine Lösung der sublimierten Terephtalsäure durch Neutralisation eintritt.

Durch die erfindungsgemäße neue Verwendung der belagsreduzierenden Verbindungen (B) und/oder (C) wird zwar nicht die Sublimation der im Polyamid 12 verbliebenen Restmonomere oder Oligomere oder die bei der Verarbeitung gebildeten Abbauprodukte verhindert, aber die zusätzlichen Rezepturbestandteile sind in der Lage, diese Stoffe zu verflüssigen.

Die erfindungsgemäßen thermoplastischen Polyamid-Formmassen sind im allgemeinen Polyamid-Formmassen, aber insbesondere thermoplastische Polyamid 12-Formmassen, auf Basis von hydrolytisch hergestelltem Polyamid 12 oder auf Basis von Polyamid 12-Blockcopolymeren, die Polyester-, Polyether-, Polysiloxan-, Polycarbonat-, Polyacrylat-, Polymethacrylat- oder Polyolefinsegmente als weitere Bausteine neben einem Anteil von mindestens 20 % Polyamid 12-Bausteinen enthalten können.

Vorteilhafte Ausführungsformen sind in den Unteransprüchen beschrieben.

Anteile der Verbindungen (B) und/oder (C), aber auch Monomere und Oligomere, die während der Verarbeitung an die Prüfteiloberfläche migrieren, erfahren im Temperaturbereich von z.B. 50°C bis 100°C, also bei Bedingungen entsprechend üblichem Praxisgebrauch, Rückdiffusion in die Polyamid-Formmasse, was als erwünschtes Verhalten zu betrachten ist. Im Fall von Polyamid 12 kann man sich dieses unerwartete Ergebnis so erklären, dass sich die Verbindungen (B) und/oder (C), insbesondere N-Octylpyrrolidon, N-Butylbenzolsulfonamid (BBSA) oder N-Butyltoluolsulfonamid, in der Polyamid 12-Matrix lösen und, da N-Octylpyrrolidon auch Lactam 12 zu lösen vermag, dessen Rückdiffusion in die Matrix ermöglicht. Die Verbindungen (B) und/oder (C) wirken daher wahrscheinlich so, dass die Sublimation von Lactam 12 zwar nicht unterbunden ist, sich aber anstelle von Feststoffablagerungen feine und farblose und niederviskose Tröpfchen bilden, die spontan wegfließen, leicht weggewischt werden können oder, wenn sie auf der Oberfläche verbleiben, auch in die Masse zurückdiffundieren.

Damit kann nun das Problem der Feststoffablagerungen bei Polyamid-Formmassen, insbesondere Polyamid 12-Formmassen, und Copolymeren, die mindestens 20 Gew.-% Polyamid-Bausteine bzw. Komponenten, bezogen auf die Polyamidmatrix-Komponente, enthalten, über eine reine Rezepturergänzung für technische Anwendungen weitgehend gelöst werden. Damit sind keine zusätzlich durchzuführenden Verfahrensschritte und damit auch keine zusätzliche thermische Belastung der Formmassen notwendig.

Die Verbindungen (B) und/oder (C) verhindern daher erfindungsgemäß bei einer Zugabemenge von 0,05 bis ca. 3 Gew.-% in der Polyamidmatrix-Komponente die Bildung von Feststoffablagerungen wirksam, die insbesondere durch Lactam 12 bedingt ist. Bevorzugt sind Zugabemengen von 0,1 Gew.-% bis 2,0 Gew.-%, besonders bevorzugt sind Zugabemengen von 0,15 Gew.-% bis 1,0 Gew.-%.

Beispiele von Phthalsäureestern zur Verwendung als ablagerungsreduzierendes Additiv, im folgenden abgekürzt als "(aA)" bezeichnet, schließen überwiegend Phthalsäureester mit linear oder verzweigen C₄ bis C₁₄ Alkoholen wie Diethylphthalat, Dibutylphthalat, Butyloctylphthalat, Butylisodecylphthalat, Diisooctylphthalat, Dicaprylphthalat, n-Octyl-n-decylphthalat, Diethylphthalat, Diisobutylphthalat, Diheptylphthalat, Di-2-ethylhexylphthalat, Diisodecylphthalat, Butylbenzylphthalat, Diisononylphthalat, Di-2-ethylhexyltetrahydrophthalat und Dimethoxyethylphthalat ein.

Beispiele von Fettsäureestern zur Verwendung als "aA" schließen Di-2-ethylhexyladipat, Düsodecyladipat, Diisononyladipat, Di-2-ethylhexylsebacat, Di-2-ethylhexyl-azelat, bis-2-Ethylhexyldodecandioat, bis-2-Ethylhexylfumarat, Dibutylmaleat, Acetylbutyl-ricinoleat, Tributylacetylcitrat und 2-Ethylhexylacetat ein.

Beispiele von Estern mehrwertiger Alkohole zur Verwendung als "aA" schließen 2,2,4-Trimethyl-1,3-pentandiolmonoisobutyrat, 2,2,4-Trimethyl-1,3-pentandioldiisobutyrat, Glycerintriacetat und Glycerintributyrat ein.

Beispiele der Phosphorsäureester zur Verwendung als "aA" schließen Triphenylphosphat, Cresyldiphenylphosphat, Tricresylphosphat, Trimethylphosphat, Triethylphosphat, Tributylphosphat, Tri-2-ethylhexylphosphat, Tributoxyethylphosphat und 2-Ethylhexyldiphenylphosphat ein.

Beispiele der Trimellithsäureester zur Verwendung als "aA" schließen Tribtuyltrimellitat, Tri(2-ethylhexyl)trimellitat und Tri(n-octyl)trimellitat ein.

Beispiele des Epoxy-Weichmachers zur Verwendung als "aA" schließen Di-noctylepoxyhexahydrophthalat und Di-2-ethylhexylepoxyhexahydrophthalat ein.

Bevorzugte Vertreter der oben aufgezählten "aA" gemäß der vorliegenden Erfindung schließen Phthalsäureester wie zum Beispiel Diisobutylphthalat, Diheptylphthalat, Di-2-ethylhexylphthalat und Diisodecylphthalat, Fettsäureester wie Di-2-ethylhexyladipat, Isodecyladipat, Di-2-ethylhexylsebacat und Di-2-ethylhexylazelat, Ester mehrwertiger Alkohole wie zum Beispiel 2,2,4-Trimethyl-1,3-pentandiolmonoisobutyrat und 2,2,4-Trimethyl-1,3-pentandioldiisobutyrat und Phosphorsäure-ester wie zum Beispiel Tributylphosphat, Tri-2-ethylhexylphosphat und Tributoxyethylphosphat ein.

Besonders bevorzugt von Verbindungen der Gruppe (B) sind, die bevorzugt als "aA" in der vorliegenden Erfindung verwendet werden, Phthalsäureester wie zum Beispiel Diisobutylphthalat, Di-2-ethylhexyladipat, Di-2-ethylhexylsebacat und Di-2-ethylhexylazelat, mehrwertige Alkohole wie zum Beispiel 2,2,4-Trimethyl-1,3-pentandiolmonoisobutyrat und 2,2,4-Trimethyl-1,3-pentandioldiisobutyrat und Phosphorester wie zum Beispiel Tri-2-ethylhexylphosphat.

Beispiele der Benzolsulfonsäurealkylamide zur Verwendung als "aA" schließen Benzolsulfonsäurepropylamid, Benzolsufonsäurebutylamid und Benzolsufonsäure-2-ethylhexyl-amid ein.

Beispiele der Toluolsufonsäurealkylamide zur Verwendung als "aA" schließen N-Ethyl-o- oder N-Ethyl-p-toluolsulfonsäurebutylamid und N-Ethyl-o- oder N-Ethyl-p-toluolsulfonsäure-2-ethylhexylamid ein.

Bespiele der Alkylhydroxybenzoate zur Verwendung als "aA" schließen Ethylhexyl-o- oder p-Hydroxybenzoat, Hexyldecyl-o- oder p-Hydroxybenzoat, Ethyldecyl-o- oder p-Hydroxybenzoat, Methyl-o- oder p-Hydroxybenzoat, Butyl-o- oder p-Hydroxybenzoat, Hexyl-o- oder p-Hydroxybenzoat, n-Octyl-o- oder p-Hydroxybenzoat, Decyl-o- oder p-Hydroxybenzoat, Diethylenglykoldibenzoat und Dodecyl-o- oder p-Hydroxybenzoat ein.

Beispiele für Dicarbonsäurediester sind Hexandisäurediester, zum Beispiel Benzyloctyladipat (Adimoll BO®), Dimethyladipat (Adimol DM®), Nonadisäurediester, zum Beispiel Di-nhexylazelat (Edenol 9051®), Decandisäurediester, zum Beispiel Dioctylsebacat (Edenol 888®).

Beispiele für Trialkyltrimellitat sind 1,2,4-Benzoltricarbonsäure-tris(alkylester), zum Beispiel Trioctyltrimellitat (Palatinol TOTM-I®).

Ein Beispiel für die verwendeten Tetra(2-hydroxyalkyl)ethylendiamine ist N,N,N',N'-tetrakis(2-hydroxypropyl)ethylendiamin (Quadrol®).

Ein Beispiel für Penta(2-hydroxyalkyl)alkylentriamin ist Pentrol® , das Additionsprodukt von Propylenoxid an Diethylentriamin.

Bevorzugte Vertreter der oben aufgezählten "aA" gemäß der vorliegenden Erfindung schließen Benzolsulfonsäurealkylamide wie zum Beispiel Benzolsulfonsäurebutylamid und Benzolsulfonsäure-2-ethylhexylamid, Toluolsulfon-säurealkylamide wie zum Beispiel N-Ethyl-ptoluolsulfonsäurebutylamid und N-Ethyl-p-toluolsulfonsäure-2-ethylhexylamid und Alkylhydroxybenzoate wie zum Beispiel Ethylhexyl-p-hydroxybenzoat, Hexyldecyl-p-hydroxybenzoat und Ethyldecyl-p-hydroxybenzoat ein.

Besonders bevorzugte Mitglieder von diesen schließen Benzolsulfonsäurebutylamid, Ethylhexyl-p-hydroxybenzoat und Hexyldecyl-p-hydroxybenzoat ein.

Die "aA" verhindert insbesondere bei einer Zugabemenge von 0,15 Gew.-% bis 1,0 Gew.-% in der Polyamidmatrix-Komponente die Bildung von Feststoffablagerungen wirksam.

Eine aprotische Verbindung aus der Gruppe der N-alkylierten, cyclischen Carbonsäureamide mit 5
- 7 Ringgliedern entspricht vorzugsweise einem Carbonsäureamid der Formel I: 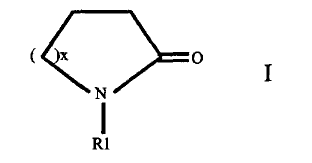
wobei x 1 bis 3 ist und R1 ein Octyl-Rest ist und linear, verzweigt oder cyclisch ist und er kann Heteroatome und Heterogruppen, insbesondere -O-Brücken enthalten. Geeignete Verbindungen sind N-Octylpyrrolidon und N-Octylcaprolactam.

N-Octylpyrrolidon bzw. BBSA ist als erfindungsgemäßer Zusatz speziell geeignet. So weisen Lactam 12 und N-Octylpyrrolidon beide ein Molgewicht von 197 g/mol auf und beide sind cyclische Amide. Weiterhin verflüchtigen sich N-Octylpyrrolidon bzw. BBSA und Lactam 12 in ca. demselben Temperaturbereich. Während sich N-Octylpyrrolidon bzw. BBSA bei hoher Temperatur verflüchtigt, erfolgt im Temperaturbereich von 100 bis 150°C Rückdiffusion in die Polyamid 12- Matrix. Ein wesentlicher Unterschied dieser Verbindungen ist der Schmelzpunkt. So weist Lactam 12 einen Schmelzpunkt von 150 °C auf und ist somit ein Feststoff bei Raumtemperatur, während N-Octylpyrrolidon bzw. BBSA eine Flüssigkeit bei Raumtemperatur ist. Eine wesentliche Eigenschaft von N-Octylpyrrolidon bzw. BBSA im Hinblick auf die vorliegende Erfindung ist, dass es fähig ist, Lactam 12 zu lösen bzw. zu verflüssigen. N-Octylcaprolactam bzw. BBSA zeigt ein ähnliches Verhalten wie N-Octylpyrrolidon bzw. BBSA, bei etwas geringerer Löslichkeit für das Lactam.

Damit gewährleistet ist, dass sich beim Verarbeiten Tröpfchen oder feine Flüssigkeitsfilme und keine Feststoffablagerungen bilden, ist nicht nur eine ausreichende Löslichkeit von Lactam in den Verbindungen (B) und/oder (C) erforderlich, sondern ebenso entscheidend sind eine dem Lactam angepasste Flüchtigkeit der Verbindungen (B) und/oder (C), eine hinreichende Löslichkeit in der PA12-Matrix sowie ein günstiges Migarationsverhalten. Vorteilhaft ist eine leicht höhere oder äquivalente Flüchtigkeit der aprotischen Verbindung in Relation zum Lactam. Die Flüchtigkeit darf aber keinesfalls zu hoch sein, damit die Vorteile hinsichtlich der Ablagerungsproblematik nicht durch die Nachteile einer zu starken Emissionsbildung mehr als kompensiert werden.

Die erfindungsgemäß eingesetzten Verbindungen (B) und/oder (C) führen auch bei höheren Konzentrationen nicht zu einem Abbau der zugrundeliegenden Polyamid-Formmassen, so dass die mechanischen Eigenschaften voll erhalten bleiben.

Weitere bevorzugt eingesetzte Verbindungen der Gruppe (C) sind Harnstoffderivate der Formel II

R'/R2- N - CO - N -R2/R' II

wobei R2 und R' unterschiedlich oder identisch, linear oder verzweigt sein können und 1 bis 8 C-Atome besitzen oder je 2 R' eine Ethylen- oder Propylenbrücke sein kann, die die beiden N-Atome verknüpft. Besonders bevorzugt ist die Verbindung, bei der R2 und R' Butyl-Reste sind Weiterhin sind der cyclische N,N-Dimethyl-ethylen- und propylen-Harnstoff sowie Tetrabutylharnstoff und Mischungen solcher Harnstoffderivate besonders geeignet. In einer besonders bevorzugten Ausführungsform werden die Harnstoffderivate als Mischungen mit den cyclischen N-Alkylcarbonamiden verwendet Wenn die Formmassen ablagerungsreduzierende Additive gemäß Formel I und/oder Formel II enthalten, bilden sich beim thermoplastischen Verarbeiten an kalten Stellen von Werkzeug- bzw. Formteiloberflächen höchstens niederviskose, farblose Tröpfchen oder Flüssigfilme, die wegfließen oder wegtropfen oder auch leicht abgewischt werden können, aber keine anhaftenden Beläge.

In einer bevorzugten Ausführungsform ist das Copolymer im wesentlichen Polyamid 12, insbesondere Polyamid 12-Blockcopolymer, das besonders bevorzugt hydrolytisch hergestellt ist Alternativ kann das Copolymer bzw. das (Co)Polyamid eine Polyamidmischung sein, die z. B. eine Polyamidlegierung oder ein mehrphasiger Blend ist, das gegebenenfalls Phasenvermittler und/oder Schlagzähmodifikatoren mitenthält. So kann es beispielsweise eine 2- phasige Polyamid-Mischung sein, die aus Polyamid 12, einem semiaromatischen Polyamid und gegebenenfalls einem Verträglichkeitsvermittler besteht.

In einer alternativen Ausführungsform ist die Formmasse eine Polyamidmischung aus mindestens 20 Gew.-% Polyamid 12 und einem semikristallinen (Co)Polyamid und/oder amorphen (Co)Polyamid. Besonders bevorzugt ist als (Co)Polyamid eine PA-Mischung aus Polyamid 12 und einem amorphen Copolyamid.

Als zusätzliche Polyamide (PA) für die erfindungsgemäßen Polyamidmischungen werden vorteilhafterweise Polyamide basierend auf C₆-C₁₂-Lactamen oder ω-Aminocarbonsäuren mit 4 bis 18 Kohlenstoffatomen, bevorzugt 6 bis 12 Kohlenstoffatomen, oder Polykondensate verwendet, erhältlich aus der Polykondensation von mindestens einem Diamin aus der Gruppe der aliphatischen Diamine mit 4 bis 18 C-Atomen, der cycloaliphatischen Diamine mit 7 bis 22 C-Atomen in Kombination mit mindestens einer Dicarbonsäure aus der Gruppe aus aliphatischen Dicarbonsäuren mit 4 bis 44 C-Atomen, cycloaliphatischen Dicarbonsäuren mit 8 bis 24 C-Atomen und aromatischen Dicarbonsäuren mit 8 bis 20 C-Atomen. Die ω-Aminocarbonsäuren oder die Lactame sind ausgewählt aus der Gruppe aus ε-Aminocapronsäure, 11-Aminoundecansäure, 12-Aminododecansäure, ε-Caprolactam, Enantholactam, Laurinlactam. Weiterhin ist es erfindungsgemäß möglich, Mischungen solcher Polymerisate bzw. Polykondensate einzusetzen. Erfindungsgemäß geeignete Diamine, die mit einer Dicarbonsäure kombiniert werden, sind beispielsweise 2,2,4- oder 2,4,4-Trimethylhexamethylendiamin, 1,3- oder 1,4-Bis(aminomethyl)cyclohexan, Bis(p-aminocyclohexyl)methan, m- oder p-Xylylendiamin, 1,4-Diaminobutan, 1,5-Diamino-2-methylpentan, 1,6-Diaminohexan, 1,8-Diaminooctan, 1,9-Diaminononan, 2-Methyl-1,8-diaminooctan, 1,10-Diaminodecan, 1,12-Diaminododecan, Cyclohexyldimethylendiamin, und die Dicarbonsäuren ausgewählt sind aus der Gruppe der Bernsteinsäure, Glutarsäure, Adipinsäure, Suberinsäure, Pimelinsäure, Korksäure, Azelainsäure, Sebazinsäure, Dodecandicarbonsäure, Oktadecandicarbonsäure, 4-Cyclohexan-dicarbonsäure, Terephthalsäure, Isophthalsäure und den Naphthalindicarbonsäuren.

Konkrete Beispiele für die zusätzlich in die Mischungen bzw. Legierungen einzubringenden (Co)Polyamide für die erfindungsgemäßen Formmassen sind daher Homo- oder Copolyamide aus der Gruppe aus PA 6, PA 66, PA 11, PA 46, PA 12, PA 1212, PA 1012, PA 610, PA 612, PA 69, PA 9T, PA 10T, PA 12T, PA 12I, deren Gemische oder Copolymere auf Basis der verwendeten Monomeren. Bevorzugt sind erfindungsgemäß auch Copolyamide PA 12T/12, PA 10T/12, PA 12T/106 und PA 10T/106. Weiterhin sind z. B. PA 6/66, PA 6/612, PA 6/66/610, PA 6/66/12, PA 6T/66, PA 6/6T, PA 6/6I, PA 6I/6T oder deren Gemische oder Gemische wie PA 12/MACMI, PA 66/6I/6T, MXD 6/6 ebenfalls bevorzugte Formmassen.

Die erfindungsgemäßen Polyamid-Formmassen können aber auch Polyamid-Blockcopolymere, insbesondere Polyamid 12-Blockcopolymere, enthalten, die Polyester-, Polyether-, Polysiloxan-, Polycarbonat-, Polyacrylat-, Polymethacrylat- oder Polyolefinsegmente als weitere Bausteine neben einem Anteil von mindestens 20 % Polyamid-Bausteinen, insbesondere Polyamid 12-Bausteinen, enthalten. Als Vertreter dieser Polymerklasse seien Polyetheramide, Polyetheresteramide und Polyesteramide genannt.

Natürlich können die erfindungsgemäßen thermoplastischen Polyamid-Formmassen weiterhin übliche und dem Fachmann allgemein bekannte Zusatzstoffe alleine oder in Kombination enthalten, die ausgewählt sind aus der Gruppe, bestehend aus Schlagzähmittel, Fremdpolymer, Haftvermittler, Antiflammmittel, Verstärkungsmittel wie Glas- und C-Fasern, UV- oder Wärmestabilisatoren, Stabilisatoren gegen Bewitterung, Mineralien, Verarbeitungshilfsmittel, Kristallisations-Beschleuniger oder -Verzögerer, Oxidationsschutzmittel, Fließhilfsmittel, Gleitmittel, Entformungsmittel, Flammschutzmittel, Pigmente, Farb- und Markierungsstoffe und Füllstoffe wie Russ oder Graphit oder auch Nanoteilchen in Plättchenform, entsprechend allen bei Polyamiden bekannten Zusatzstoffen, wie sie für die jeweilige Anwendung notwendig sind

Den zuvor beschriebenen (Co)Polyamiden oder Gemischen davon können für bestimmte Zwecke auch andere übliche Polymere wie Polyester, Polyolefine, Polycarbonate, AN- und ABS-Polymerisate, funktionalisierte Copolyolefine und Ionomere zugesetzt sein.

Als weitere Zusatzstoffe sind den erfindungsgemäßen thermoplastischen Polyamid-Formassen Schlagzähmodifikatoren zugesetzt. Diese sind z. B. Copolymere auf Polyolefinbasis von tiefer Glasumwandlungstemperatur, die Acrylsäure enthalten oder mit Maleinsäureanhydrid gepfropft sein können. Insbesondere seien hier Schlagzähmodifikatoren wie Ethylen-Propylen-Copolyolefine oder Ethylen-Propylen-Dien-Kautschuke (EPDM) oder Acrylatkautschuke genannt

In bevorzugten Ausführungsformen enthalten die Formmassen weiterhin nanoskalige Füllstoffe. In einer besonderen Ausführungsform der Erfindung sind die nanoskaligen Füllstoffe entweder Siliziumdioxid oder Siliziumdioxid-Hydrate. In der Polyamid-Formmasse liegen gewisse nanoskaligen Füllstoffe in einer Ausführungsform als ein gleichmäßig dispergiertes, schichtformiges Material vor. Vor dem Einarbeiten in die Matrix besitzen sie eine Schichtdicke von 0,7 bis 1,2 nm und einen Zwischenschichtabstand der Mineralschichten von bis zu 5 nm.

Die Verbindungen (B) und/oder (C) gemäß Anspruch 1 mit einer polaren, funktionellen Gruppe und einem apolaren Alkylrest können die Einarbeitung solcher Füllstoffe wesentlich erleichtern. Werden sie Schichtsilikaten zugefügt, so kann ihre polare Gruppe als Koordinationsstelle für das Kation dienen und so mitbewirken, dass sich der Schichtabstand erhöht und so die Auftrennung der Primärpartikel und ihre Verteilung in der Matrix wesentlich verbessert und beschleunigt wird

Solche Mineralien können in jeder beliebigen Stufe der Polymerherstellung zugegeben und dabei im Nanometerbereich fein verteilt werden. Bevorzugt sind Mineralien, die bereits eine Schichtstruktur aufweisen, wie Schichtsilikate, Doppelhydroxide, wie Hydrotalcit oder auch Graphit. Ebenso eignen sich Nanofüllstoffe auf Basis von Silikonen, Silica oder Silsesquioxanen.

Unter Schichtsilikaten im erfindungsgemäßen Sinne werden 1:1 sowie 2:1 Schichtsilikate verstanden. In diesen Systemen sind Schichten aus SiO₄-Tetraedern mit solchen aus M(O,OH)₆-Oktaedern in regelmässiger Weise miteinander verknüpft. M steht dabei für Metallionen wie A1, Mg, Fe. Bei den 1: 1 -Schichtsilikaten sind dabei jeweils eine Tetraeder- und eine Oktaederschicht miteinander verbunden. Beispiele hierfür sind Kaolin- und Serpentin-Minerale.

In einer Ausführungsform der Erfindung gibt man zur Herstellung der erfindungsgemäßen thermoplastischen Polyamid-Formmassen das "aA" auf Granulat aus (Co)Polyamid mit mindestens 20 % Polyamid 12-Anteil auf und mischt dieses, bis die Verbindung ins Granulat eindiffundiert ist. Das Mischen wird bevorzugt bei erhöhter Temperatur, bevorzugter bei 50 - 160 °C, insbesondere bei 60 - 120°C, durchführt.

Die "aA" können beispielsweise als Flüssigfilm auf das Granulat aufgetragen werden, wonach man gegebenenfalls weitere pulverförmige Additive zufügt, und sodann die Einextrusion nach üblichen, bekannten Verfahren erfolgt.

Zudem ist es möglich, die "aA" direkt vor der Polymerisation/Polykondensation der Monomere bzw. des Monomergemisches der Polyamid - Matrix oder während der Polymerisation/Polykondensation der Polyamid-Reaktionsmischung zuzugeben. Bei der Herstellung von Polyamid 12 kann beispielsweise das "aA" zu 12-Aminolaurinsäure oder Lactam 12 zugegeben werden, und die erhaltene Mischung wird dann, gegebenenfalls unter Zusatz mindestens eines Kettenlängenreglers, polymerisiert. Das so erhaltene Granulat kann dann im Spritzguss- oder Extrusionsverfahren thermoplastisch umgeformt werden.

Liegt bereits ein auf die Anwendung bezogenes Granulat auf (Co)Polyamidbasis vor, bei dessen Verarbeitungsprobleme wegen Ablagerungen auftreten, so kann das "aA" einfach in anwendungsgeeigneter Menge zunächst als Flüssigfilm auf die Granulatoberfläche aufgebracht werden, wonach bei Notwendigkeit eine thermische Nachbehandlung erfolgen kann und dabei die Verbindunen (B) und/oder (C) ins Granulat eindiffundieren, wodurch dieses seine gute Rieselfähigkeit zurückgewinnt, oder es können nachfolgend geeignete Feststoffadditive aufgebracht werden.

In einer bevorzugten Ausführungsform der Erfindung arbeitet man die "aA" (B) und/oder (C) kontinuierlich während einem Extrusionsdurchgang, bevorzugt unter Verwendung eines 2-Wellenextruders, einer sog. ZSK, insbesondere auch gleichzeitig mit den weiteren Rezepturbestandteilen in die Polyamid-Matrix aus (Co)Polyamid mit mindestens 20 % Polyamid 12-Anteil ein. Man kann die aprotische Verbindung auch in höherer Konzentration einarbeiten und das so hergestellte Granulat als Masterbatch verwenden.

Die erfindungsgemäßen Polyamid-Formmassen werden zur thermoplastischen Umformung zu Gebrauchsgegenständen in diskontinuierlichen Prozessen, insbesondere im Spritzguss, und in kontinuierlichen Prozessen wie der Extrusion zu Folien, Fasern, Rohren und Ummantelungen verwendet, wobei sich die thermoplastischen Polyamid-Formmassen gemäß der vorliegenden

Erfindung insbesondere dadurch auszeichnen, dass bei der thermoplastischen Umformung keine Feststoffablagerungen entstehen.

Die folgenden Beispiele und Figuren sollen die Erfindung erläutern, ohne sie jedoch einzuschränken.

Figur 1 zeigt die Bildung von festen Ablagerungen (1 Min.) ohne die Verwendung von BBSA (N-n-Butylbenzolsulfonamid) gemäß dem Stand der Technik (vgl. Beispiel 10).

Figur 2 zeigt die Bildung von festen Ablagerungen nach 10 Minuten, ohne BBSA-Zusatz (Stand der Technik; vgl. Beispiel 10).

Fig. 3 zeigt die Verwendung von 0,75 Gew.-% BBSA als belagsreduzierendes Additiv gemäß der vorliegenden Erfindung. Nach einer Minute konnte man einen Polyamid 12 Film ohne Lactam-12 Belag extrudieren (vgl. Beispiel 16).

Fig. 4 zeigt die Verwendung von 0,75 Gew.-% BBSA bei 10 Minuten. Es konnten Feststoffablagerungen vermieden werden (vgl. Beispiel 16).

### Beispiele

In den Beispielen bedeuten:

| Abkürzung Bezeichnung | |
|---|---|
| aA | Belagsreduzierendes Additiv |
| NOP | N-Octylpyrrolidon |
| NMP | N-Methylpyrrolidon |
| BBSA | N-n-Butylbenzolsulfonamid |
| LC12 | Laurinlactam |
| PA12 | Polyamid 12 |
| Grilamid L20 natur | mittelviskoses PA12, Basisgranulat, Spritzgussqualität der Fa. EMS-Chemie AG, CH-Domat/Ems |
| Grilamid L20G natur | mittelviskoses PA12 mit Gleitmittel der Fa. EMS-Chemie AG, CH-Domat/Ems |
| Polyamid 12 Typ A | mittelviskoses PA12; hydrolyse-, hitze-, UV-beständig, schwarz, der Fa. EMS-Chemie AG, CH-Domat/Ems |
| MVR (Melt Volume Index) | Schmelze-Volumenfliess-Rate nach EN ISO 1133 |
| VB | Vergleichsbeispiel |
| ηᵣₑₗ | relative Lösungsviskosität des Polylactams, gemessen als 0,5 %ige Lösung in m-Kresol nach EN ISO 3105 |

### Beispiele 1, 2 (erfindungsgemäß) sowie Vergleichsbeispiel 3: Wellrohrextrusion von PA 12

Zur Untersuchung der Auswirkung der belagsvermindernden Additive auf die Produktion von Wellrohren wurde ein Compound mit 0,5 % NOP bzw. BBSA in Polyamid 12 Typ A hergestellt und im Dauerversuch mit dem Grundmaterial verglichen (Tabelle 1). Das Material wurde bei 250 °C extrudiert (Müller & Sohn AG, Rorbas) und mit einer Abzugsgeschwindigkeit von ca. 2m/min und einer Formbackentemperatur von 50 °C zu Wellrohr (Uniwell Corrugator) verarbeitet. Mit den erfindungsgemäßen Compounds zeigten sich nach 10 h nur sehr wenige Ablagerungen an den Vakuumschlitzen, während sich beim reinen PA12 ohne belagsverminderndes Additiv bereits nach 1 Stunde LC12-Belag bildete, der die Vakuumschlitze nach 3 Stunden verstopfte. Die Werte für ηᵣₑₗ zeigen in Beispiel 1 und 2 keinen Abbau.

### Beispiele 4 bis 8 (erfindungsgemäß) und Vergleichsbeispiel 9: Spritzguss von PA12 mit belagsreduzierenden Zusätzen

Auf einer Spritzgussanlage Krauss Maffei KM 50-55C wurden Untersuchungen zur Belagsbildung durch LC12 bzw. Additiven durchgeführt. Als Werkzeug wurde ein Modul für Bindenahtzugstäbe verwendet, welches einen nitrierten Entlüftungseinsatz mit 0,01 mm Entlüftungstiefe aufwies. Um den Mindestgehalt an belagsreduzierendem Additiv zu bestimmen, bei dem keine festen Ablagerungen aus LC12 im Spritzgusswerkzeug enstehen, wurden dem Grilamid L20G natur je 0,05 Gew.-%, 0,07 Gew.-%, 0,12 Gew.-%, 0,25 Gew.-%, und 0,80 Gew.-% NOP, NMP bzw. BBSA zugesetzt und mit einer Einspritzgeschwindigkeit von 100 mm/s und einer gestochenen Massetemperatur von 290 °C zu Zugstäben hergestellt (Tabelle 2). An der Entlüftungsöffnung des Werkzeuges konnte man bei zu geringem Anteil aA einen Belag bzw. eine hochviskose Ablagerung erkennen, bei ausreichendem Anteil bildete sich dagegen kein Belag, sondern ein dünner, mittel bis niedrig viskoser, farbloser Flüssigkeitsfilm, der den Spritzgussvorgang in keiner Weise beeinträchtigte. Ab einem Gehalt von mindestens 0,05 bzw. 0,07 Gew.-% bildete sich mit NMP bzw. NOP und BBSA keine festen LC12-Ablagerungen. Ohne Verwendung des erfindungsgemäßen Additivs wird die Bildung eines festen Belages bereits nach wenigen Verarbeitungszyklen beobachtet.

### Beispiele 11 bis 16 (erfindungsgemäß) und Vergleichsbeispiel 10: Folienberstellung, auf einer gekühlten Walze

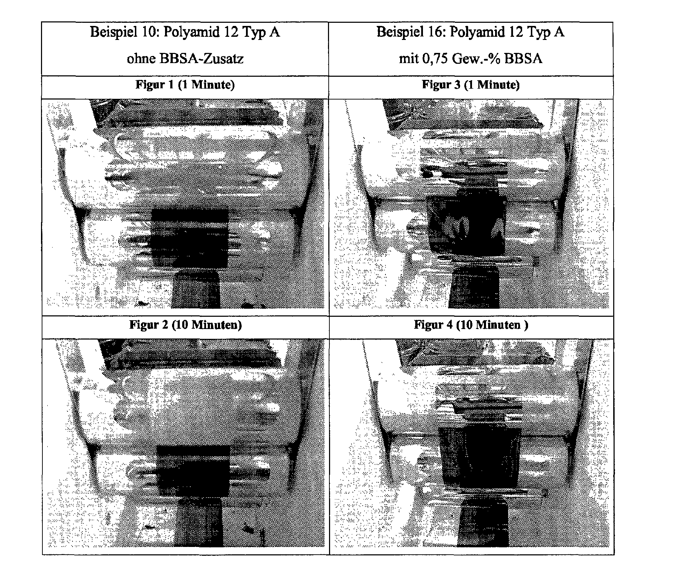

Auf einem Zweischneckenextruder ZK 25 T der Firma Collin, Ebersberg, wurde Grilamid L20 natur aufgeschmolzen und als Folie abgezogen, wobei die Belagsbildung von LC12 beobachtet wurde. Der Durchmesser der beiden gleichläufigen Schnecken betrug 25 mm und das Längen/Durchmesserverhältnis L/D=8/1. Das Granulat wurde über einen gravimetrischen Dosierer K-Tron K-SFS-24 mit Schneckenförderung dosiert und durch fünf Heizzonen mit 100, 230, 240, 240 und 240 °C aufgeschmolzen. Die Schmelze wurde durch eine horizontale Breitschlitzdüse (120 mm) ausgetragen. Die Drehzahl betrug 150 U/min bei einem Durchsatz von 3 kg/h. Die Folie wurde von einer Flachfolienanlage Collin Chill Roll Typ CR 72 T abgezogen, geglättet und aufgewickelt. Die ersten zwei Walzen waren temperiert (20 °C) und geschlossen. Anschließend lief die Folie über eine Kühlwalze und wurde aufgewickelt. Ohne belagsreduzierendes Additiv bildeten sich innerhalb weniger Minuten feste Ablagerungen auf der oberen temperierten Walze, die sich von Zeit zu Zeit von der Walze lösten und auf der Folie hängen blieben (siehe Figuren 1 und 2).

In Folgeversuchen wurden dem Polymer unterschiedliche Konzentrationen NOP und BBSA zugesetzt (Beispiele 11 bis 16; Tabelle 3). Mit höherem Additiv-Anteil nahmen die Ablagerungen ab, bis man bei 0,5 Gew.-% NOP oder 0,75 Gew.-% BBSA einen PA12-Film ohne LC12-Belag extrudieren konnte (siehe Figuren 3 und 4).

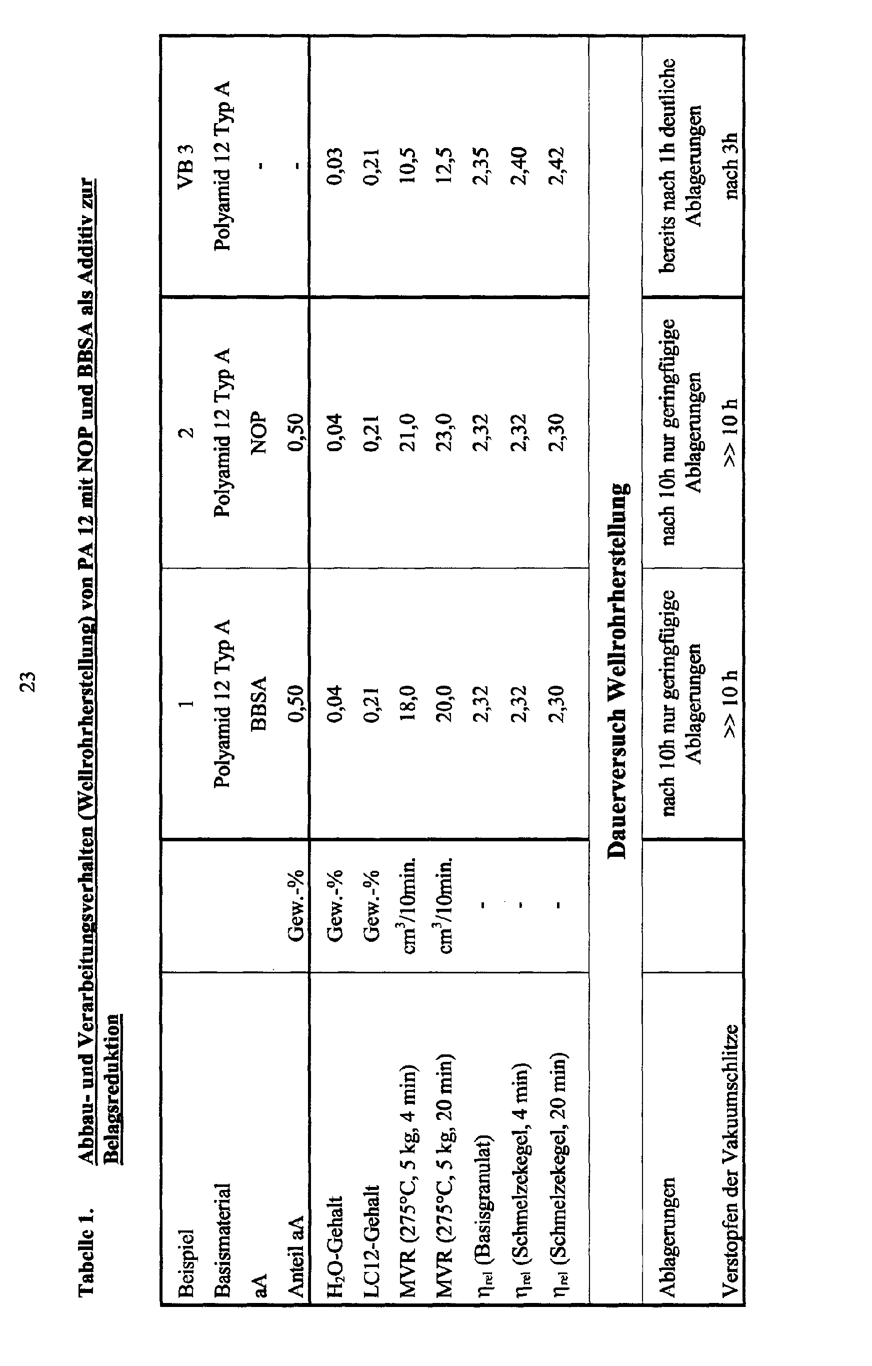

**Tabelle 2:**

| **Beschaffenheit der sich beim Spritzguss bildenden Ablagerungen mit variierten Anteilen an belagsreduzierrendem Additiv aA in Grilamid L 20 G** | | | | |
|---|---|---|---|---|
| Beispiel | Anteil aA [Gew.-%] | Art des Belages unter Verwendung von | | |
| | | NOP | NMP | BBSA |
| 4 | 0,05 | hochviskos | niedrigviskos | mittelviskos |
| 5 | 0,07 | mittelviskos | niedrigviskos | mittelviskos |
| 6 | 0,12 | niedrigviskos | niedrigviskos | niedrigviskos |
| 7 | 0,25 | niedrigviskos | niedrigviskos | niedrigviskos |
| 8 | 0,80 | niedrigviskos | niedrigviskos | niedrigviskos |
| VB 9 | 0,00 | Fest | | |

**Tabelle 3:**

| **Belagsbildung bei der Folienextrusion mit varrieten Anteilen an belagsreduzierendem Additiv in Grilamid L20** | | | |
|---|---|---|---|
| Beispiel | Anteil aA [Gew.-%] | aA | LC12-Belag auf der Walze |
| VB 10 | - | - | sehr starker Belag |
| 11 | 0,15 | NOP | leichter Belag |
| 12 | 0,25 | NOP | leichter Belag |
| 13 | 0,50 | NOP | dünner, farbloser Film |
| 14 | 0,25 | BBSA | leichter Belag |
| 15 | 0,50 | BBSA | leichter Belag |
| 16 | 0,75 | BBSA | dünner, farbloser Film |

## Patentansprüche

1. Verwendung von thermoplastischen Polyamid-Formmassen mit verringerter oder stark reduzierter Bildung von Feststoffablagerungen und/oder Belägen bei der thermoplastischen Umformung zu Gebrauchsgegenständen in diskontinuierlichen Prozessen, insbesondere im Spritzguss, und in kontinuierlichen Prozessen wie der Extrusion zu Folien, Fasern, Rohren und Ummantelungen enthaltend
(A) mindestens 20 Gew.-% Polyamid und/oder mindestens ein Copolymer mit mindestens 20 Gew.-% Polyamid-Bausteinen,
(B) 0,05 Gew.-% bis maximal 3,0 Gew.-%, jeweils bezogen auf das Gesamtgewicht der Polyamidmatrix-Komponente, mindestens einer Verbindung, ausgewählt aus der Gruppe, bestehend aus Benzolsufonsäurealkylamiden, o, p-Toluolsufonsäurealkylamiden, Alkylhydroxybenzoaten, Benzolcarbonsäureestern, Phthalsäureestern, Fettsäureestern, Estern mehrwertiger Alkohole, Dicarbonsäurediestern mit einer Kohlenstoffzahl der Säuren von 4 bis 44 Atomen, Trialkylmellitsäureestern, Phosphorsäureestern, Zitronensäureestern, Tetraalkylalkylendiaminen, Tetra(2-hydroxyalkyl)alkylendiaminen, Trialkylaminen und Gemischen der vorgenannten Verbindungen, und/oder
(C) 0,05 Gew.-% bis maximal 3,0 Gew.-%, jeweils bezogen auf das Gesamtgewicht der Polyamidmatrix-Komponente, mindestens einer aprotischen Verbindung, ausgewählt aus der Gruppe der N-alkylierten, cyclischen Carbonsäureamide mit 5 - 7 Ringgliedern, wobei das Carbonsäureamid der folgenden Formel I entspricht und x 1 bis 3 ist und R1 ein Octyl-Rest ist: 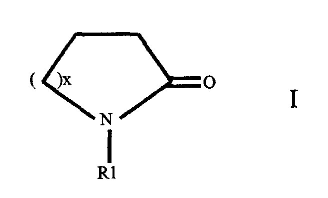
wobei der Octyl-Rest am Stickstoffatom linear, verzweigt oder cyclisch ist und gegebenenfalls Heteroatome und Heterogruppen enthält oder eine Verknüpfung der beiden N-Atome bildet,
und/oder der Gruppe der Harnstoffderivate

2. Verwendung von thermoplastischen Polyamid-Formmassen gemäß Anspruch 1, **dadurch gekennzeichnet, dass** die Komponente (B) in einer Menge von 0,1 bis 2,0 Gew.-% enthalten ist und dass als Benzolsulfonsäureamid N-Butylbenzolsulfonsäureamid verwendet wird.

3. Verwendung von thermoplastischen Polyamid-Formmassen gemäß Anspruch 1, **dadurch gekennzeichnet, dass** als *ortho, para-* Toluolsulfonsäureamid N-Butyltoluolsufonsäureamid verwendet wird.

4. Verwendung von thermoplastischen Polyamid-Formmassen gemäß Anspruch 1, **dadurch gekennzeichnet, dass** als Tetra(2-hydroxyalkyl)alkylendiamin N,N,N',N'-Tetrakis(2-hydroxypropyl)ethylendiamin verwendet wird.

5. Verwendung von thermoplastischen Polyamid-Formmassen gemäß irgendeinem der Ansprüche Anspruch 1 bis 4, **dadurch gekennzeichnet, dass** das Carbonsäureamid N-Octylpyrrolidon ist.

6. Verwendung von thermoplastischen Polyamid-Formmassen gemäß irgendeinem der vorangehenden Ansprüche 1 bis 5, **dadurch gekennzeichnet, dass** das Harnstoffderivat der Formel II entspricht,
R'/R2- N - CO - N -R2/R' II
wobei R2 und R' unterschiedlich oder identisch, linear oder verzweigt sein können und 1 bis 8 C-Atome besitzen oder 2 R' eine Ethylen- oder Propylenbrücke zwischen den beiden N-Atomen bilden können.

7. Verwendung von thermoplastischen Polyamid-Formmassen gemäß Anspruch 6, **dadurch gekennzeichnet, dass** R2 und R' Butyl-Reste sind.

8. Verwendung von thermoplastischen Polyamid-Formmassen gemäß irgendeinem der Ansprüche 1 bis 7, **dadurch gekennzeichnet, dass** als aprotische Verbindung mindestens eine Verbindung eingesetzt wird, die ausgewählt ist aus der Gruppe, bestehend aus N-Octylpyrrolidon, N-Octylcaprolactam, cyclisches N,N-Dimethylethylenhamstoff, cyclisches N,N-Dimethylpropylenharnstoff und Tetrabutylharnstoff und deren Gemischen.

9. Verwendung von thermoplastischen Polyamid-Formmassen gemäß irgendeinem der Ansprüche 1 bis 8, **dadurch gekennzeichnet, dass** das Polyamid oder das Copolymer im wesentlichen ein Polyamid ist, ausgewählt aus der Gruppe, bestehend aus PA 6, PA 66, PA 11, PA 12, PA 46, PA 1212, PA 1012, PA 610, PA 612, PA 69, PA 9T, PA 10T, PA 12T, PA 12I, deren Gemische oder Copolyamide auf Basis der verwendeten Polyamidmonomeren und/oder Polyamid 12, sowie PA 6T/66, PA 6/6T, PA 6/6I, PA 6I/6T oder deren Gemische oder Gemische wie PA 12/MACMI, PA 66/6I/6T, MXD 6/6, wobei auch dimerisierte Fettsäuren mit 36 und 44 C-Atomen als Monomere verwendet werden können.

10. Verwendung von thermoplastischen Polyamid-Formmassen gemäß irgendeinem der Ansprüche 1 bis 9, **dadurch gekennzeichnet, dass** das Polyamid 12 hydrolytisch herstellbares Polyamid 12 ist.

11. Verwendung von thermoplastischen Polyamid-Formmassen gemäß irgendeinem der Ansprüche 1 bis 10, **dadurch gekennzeichnet, dass** das Copolymer ein Polyamid-Blockcopolymer, insbesondere ein Polyamid 12-Blockcopolymer, ist, welches Polyester-, Polyether-, Polysiloxan-, Polycarbonat-, Polyacrylat-, Polymethacrylat- oder Polyolefinsegmente als weitere Bausteine neben einem Anteil von mindestes 20 Gew.-% Polyamid-Bausteinen, insbesondere 20 Gew.-% Polyamid 12-Bausteinen, enthält

12. Verwendung von thermoplastischen Polyamid-Formmassen gemäß irgendeinem der Ansprüche 1 bis 11, **dadurch gekennzeichnet, dass** das Copolymer eine 2-phasige Polyamid-Mischung, bestehend aus einem Polyamid aus der Gruppe aus PA 6, PA 66, PA 11, PA 12, PA 46, PA 1212, PA 1012, PA 610, PA 612, PA 69, PA 9T, PA 10T, PA 12T, PA 12I, deren Gemische oder Copolyamide auf Basis der verwendeten Polyamidmonomeren und/oder Polyamid 12, sowie PA 6T/66, PA 6/6T, PA 6/6I, PA 6I/6T oder deren Gemische oder Gemische wie PA 12/MACMI, PA 66/6I/6T, MXD 6/6, wobei auch dimerisierte Fettsäuren mit 36 und 44 C-Atomen als Monomere verwendet werden können, wobei Polyamid 12 bevorzugt ist, und einem semiaromatischen Polyamid, gegebenenfalls mitenthaltend einen Verträglichkeitsvermittler, ist.

13. Verwendung von thermoplastischen Polyamid-Formmassen gemäß Anspruch 12, **dadurch gekennzeichnet, dass** die Polyamidmischung als mehrphasige Mischung vorliegt, die gegebenenfalls Phasenvermittler und/oder Schlagzähmodifikatoren enthält.

14. Verwendung von thermoplastischen Polyamid-Formmassen gemäß Anspruch 13, **dadurch gekennzeichnet, dass** das (Co)Polyamid eine Polyamid-Mischung aus Polyamid 12 und einem amorphen Copolyamid oder einem semikristallinen Polyamid ist.

15. Verwendung von thermoplastischen Polyamid-Formmassen gemäß irgendeinem der Ansprüche 1 bis 14, **dadurch gekennzeichnet, dass** sie übliche Zusatzstoffe alleine oder in Kombination enthält, die ausgewählt sind aus der Gruppe, bestehend aus Schlagzähmittel, Fremdpolymer, Haftvermittler, Antiflammmittel, Verstärkungsmittel wie Glas- und C-Fasern, sowie Stabilisatoren gegen Abbau durch Licht, Hitze, Bewitterung, Mineralien und Verarbeitungshilfsmittel, Farbstoff und Russ.

16. Verwendung von thermoplastischen Polyamid-Formmassen gemäß irgendeinem der Ansprüche 1 bis 15, **dadurch gekennzeichnet, dass** sie nanoskalige Füllstoffe enthält.

17. Verwendung von thermoplastischen Polyamid-Formmassen gemäß irgendeinem der Ansprüche 1 bis 16, **dadurch gekennzeichnet, dass** man die Verbindung (B) und/oder (C) auf Granulat aus (Co)Polyamid aufgibt und dieses, bevorzugt bei erhöhter Temperatur, solange mischt, bis die Verbindung ins Granulat eindiffundiert ist.

18. Verwendung von thermoplastischen Polyamid-Formmassen gemäß Anspruch 17, **dadurch gekennzeichnet, dass** man im Bereich von Raumtemperatur bis maximal 160 °C, insbesondere bei 60 bis 120°C, arbeitet.

19. Verwendung von thermoplastischen Polyamid-Formmassen gemäß irgendeinem der Ansprüche 1 bis 18, **dadurch gekennzeichnet, dass** man die Verbindung (B) und/oder (C) in einem hohen Anteil von 3 bis 30 Gew.-% in die Polyamid-Matrix einarbeitet und man dieses Granulat so dann als Masterbatch verwendet.

20. Verwendung von thermoplastischen Polyamid-Formmassen gemäß irgendeinem der Ansprüche 1 bis 19, **dadurch gekennzeichnet, dass** man die Verbindung (B) und/oder (C) kontinuierlich während einem Extrusionsdurchgang, bevorzugt unter Verwendung eines 2-Wellenextruders, einer sog. ZSK, insbesondere auch gleichzeitig mit den weiteren Rezepturbestandteilen in die Polyamid-Matrix aus (Co)Polyamid mit mindestens 20 Gew.-% Polyamid-Bausteinen.

21. Gebrauchsgegenstände in Form von Folien, Fasern, Rohren und Ummantelungen und in Form von Spritzgussteilen herstellbar aus den Formmassen gemäß irgendeinem der Ansprüche 1 bis 20.
